# EUROPÄISCHE PATENTSCHRIFT

(11) **EP 0 643 208 B1**
(45) Veröffentlichungstag und Bekanntmachung des Hinweises auf die Patenterteilung: **17.12.1997**
(21) Anmeldenummer: 94113157.5
(22) Anmeldetag: 23.08.1994
(51) Int. Cl.: F02C 7/24, F01D 25/14, F16L 59/02

(54) **Wärmedämmanordnung**
Heat insulation arrangement
Dispositif d'isolation thermique

(30) Priorität: 13.09.1993 DE 4331060
(43) Veröffentlichungstag der Anmeldung: 15.03.1995
(73) Patentinhaber: G + H MONTAGE GmbH, D-67059 Ludwigshafen (DE)
(72) Erfinder: Bechtel, Hans-Peter, D-67069 Ludwigshafen (DE); Schneeberger, Winfried, D-67071 Ludwigshafen/Ruchheim (DE)
(74) Vertreter: Grünecker, Kinkeldey, Stockmair & Schwanhäusser Anwaltssozietät

(56) Entgegenhaltungen:
- EP-A- 0 265 337
- EP-A- 0 515 892
- DE-A- 3 446 649
- DE-A- 3 940 381
- DE-A- 4 033 711
- DE-C- 4 331 060
- US-A- 4 925 365

## Beschreibung

Die vorliegende Erfindung betrifft eine thermische Turbomaschine, insbesondere eine Flugzeuggasturbine, mit wenigstens einem eine Wärmedämmanordnung enthaltenden, aus Gehäuseteilen gebildeten Hohlraum, wobei die Wärmedämmanordnung ein in einer hitzebeständigen Ummantelung eingeschlossenes Wärmedämmaterial aufweist.

Eine derartige Turbomaschine ist aus der US 49 25 365 bekannt.

Bei thermischen Turbomaschinen, wie Flugzeugturbinen oder stationären Gasturbinen, ist beispielsweise eine Wärmedämmung eines Gehäuses gegen in einem Gasverdichtungsbereich angeordnete Bauteile, die aufgrund der Gaskompression eine hohe Temperatur aufweisen, notwendig. Bei einer wirksamen Wärmeisolation des Gehäuses gegen die auf hoher Temperatur befindlichen Bauteile der Turbomaschine kann die Ausdehnung infolge thermischer Expansion des Gehäuses verringert werden. Beispielsweise bei Flugzeugtriebwerken führt eine hohe thermische Expansion des Gehäuses zu einer Verringung des Wirkungsgrads und ggf. zu einem völligen Ausfall des Triebwerks, da die zum ordnungsgemäßen Betrieb des Triebwerks erforderliche Dichtigkeit zwischen im Triebwerk umlaufenden Turbinenschaufeln und am Gehäuse befestigten Dichtelementen bei Gehäuseausdehnung in radialer Richtung verlorengeht.

Nach dem Stand der Technik, wie er aus der US-49 25 365 bekannt ist, werden die den Hochtemperaturgasen in der Turbine mittelbar oder unmittelbar ausgesetzten Innenflächen des Gehäuses mit einer Wärmedämmanordnung verkleidet. Bekannte Wärmedämmanordnungen weisen ein in einer stabilen, temperaturfesten Ummantelung eingeschlossenes Wärmedämmaterial auf. Die Ummantelung besteht aus zwei einander angepaßten, in einem Tiefziehverfahren hergestellten, formbeständigen Metallschalen. Um eine wirksame Wärmedämmung zu erzielen, sind die Metallschalen an die Gehäuseinnenflächen angepaßt, die eine komplizierte Struktur aufweisen, um eine Anordnung von hochtemperaturfesten Hitzeschilden, Dichtelementen und feststehenden Turbinenschaufeln zu ermöglichen. Die an der Gehäusewand ausgebildeten Hohlräume oder Vertiefungen werden jedoch aufgrund von Fertigungstoleranzen für die Wärmedämmelemente oder beispielsweise aufgrund der komplizierten Formgebung der Hohlräume nicht vollständig ausgefüllt, so daß gasgefüllte Freiräume verbleiben, in denen durch Wärmekonvektion eine die Wärmedämmung umgehende Wärmeleitung geschaffen wird. Dadurch kann die Wärmedämmung nicht ihre optimale Wirkung entfalten, so daß das Gehäuse eine vergleichsweise höhere Temperatur beim Betrieb der Turbine annimmt, wodurch die Leistung der Turbine aufgrund der verminderten Dichtigkeit eingeschränkt wird.

Zusätzlich sei noch auf die EP-A-0 265 337 hingewiesen, die eine gekapselte Wärmedämmanordnung mit komprimierbarer Ummantelung zeigt, um einen Einbau desselben zu erleichtern und eine Wärmeausdehnung von umgebenden Teilen zu erleichtern.

Es ist daher die Aufgabe der vorliegenden Erfindung, eine thermische Turbomaschine mit wenigstens einem, eine Wärmedämmanordnung enthaltenden, aus Gehäuseteilen gebildeten Hohlraum zu schaffen, bei der eine verbesserte Leistung bzw. Effizienz erzielt wird.

Erfindungsgemäß wird die Aufgabe gelöst durch eine thermische Turbomaschine mit wenigstens einem eine Wärmedämmanordnung enthaltenden, aus Gehäuseteilen gebildeten Hohlraum, wobei die Wärmedämmanordnung ein in einer hitzebeständigen Ummantelung eingeschlossenes Wärmedämmaterial aufweist, dadurch gekennzeichnet, daß die Ummantelung derart ausgebildet ist, daß sie eine Veränderung des Innenvolumens erlaubt, daß das Wärmedämmaterial aus einem bei Erwärmung sein Volumen vergrößernden Wärmedämmaterial besteht und die Ummantelung mittels des bei Erwärmung sein Volumen vergrößernden Wärmedämmaterials ausdehnbar ist zur thermoautomatischen Volumenexpansion bis zur Anlage an die einen Widerstand entgegensetzenden, den Hohlraum begrenzenden Gehäuseteile.

Die erfindungsgemäße thermische Turbomaschine schafft den Vorteil, daß die unter Normaltemperatur in die Hohlräume der thermischen Turbomaschine eingefügte, im wesentlichen bereits an den Hohlraum angepaßte Wärmedämmanordnung bei Erwärmung sich ausdehnt, wobei noch vorhandene Freiräume und Spalten zwischen der Ummantelung und der Innenwand des Hohlraums ausgefüllt werden. Die Wirksamkeit der Wärmedämmanordnung wird dadurch erhöht, da Wärmekonvektionsströme, wie die Wärmedämmanordnung hinterkriechende Gasströme, unterbunden werden. Die Erfindung schafft zudem eine Kostenersparnis durch größere Fertigungstoleranzen, da sich die Wärmedämmanordnung an die kompliziert gestalteten Hohlräume in der thermischen Turbomaschine aufgrund der durch eine Temperturerhöhung ausgelösten Ausdehnung anschmiegt. Weiter schafft die erfindungsgemäße thermische Turbomaschine die Möglichkeit der Selbstarretierung einer solchen Wärmedämmanordnung in einem nicht vollständig umschlossenen Hohlraum bzw. einer geeignet ausgestalteten Ausnehmung, wenn sich die Wärmedämmanordnung bei Erwärmung hinter vorstehenden Teilen in den Hohlraum oder der Ausnehmung ausdehnt. Eine weitere Kostenersparnis wird durch die verbesserte Wärmedämmeigenschaft in einer thermischen Turbomaschine mit einer solchen Wärmedämmanordnung erzielt, da aufgrund der erniedrigten Temperatur geringere Anforderungen an die Hitzebeständigkeit der verwendeten Materialien bestehen, wodurch kostengünstigere Werkstoffe zum Einsatz kommen können. Andererseits sind durch die verbesserte Wärmedämmung Möglichkeiten für neue Entwürfe von Turbomaschinen oder erhöhte Betriebsleistungen bekannter Maschinen eröffnet.

In einer vorteilhaften Ausführungsform der thermischen Turbomaschine weist die Ummantelung der Wärmedämmanordnung wenigstens zwei Teilflächen auf, deren übereinander angeordnete Randbereiche umgefalzt sind, um eine bei der Volumenerhöhung des Wärmedämmaterials aufweitbare Verbindung zu schaffen. Insbesondere bei Verwendung einer Metallfolie für die Ummantelung erweist sich eine solche Falzverbindung als vorteilhaft, um auf einfache Weise eine eine Erhöhung des Innenvolumens der Ummantelung ermöglichende Verbindung der zwei Teilflächen zu schaffen. Bei einer Erwärmung der Wärmedämmvorrichtung mit einer daraus resultierenden Volumenerhöhung des Wärmedämmaterials wird die aufgrund der Formfestigkeit der Metallfolie gebildete Verbindung durch den ausgeübten Innendruck auseinandergezogen. Eine derartige Verbindung der beiden Teilflächen der Ummantelung zur Bildung einer thermoautomatischen Fugennaht vermeidet aufwendige Arbeitsprozesse, wie Löten oder Schweißen, und schließt zusätzlich die Verwendung von Klebstoffen aus, die bei thermischen Turbomaschinen unerwünscht sind.

In einer weiteren vorteilhaften Ausführungsform der thermischen Turbomaschine weist das Wärmedämmaterial eine bei Erwärmung von einer Ausgangstemperatur zu einer Verformungstemperatur irreversible Ausdehnung auf. Eine in einen Hohlraum eingefügte Wärmedämmanordnung ist daher nach einem solchen Erwärmungsvorgang homogen und dauerhaft an den Hohlraum angepaßt. Eine solche Ausführungsform der Wärmedämmanordnung weist insbesondere bei Selbstarretierung der Wärmedämmanordnung in einer Ausnehmung einen Vorteil auf, da auch bei Abkühlung auf Normaltemperatur eine Halterung der Wärmedämmvorrichtung aufrechterhalten wird.

In einer weiteren vorteilhaften Ausführungsform der thermischen Turbomaschine verfügt die Wärmedämmanordnung über Druckausgleichsvorrichtungen, die beispielsweise eine Öffnung in der Ummantelung umfassen, die mit wenigstens einer Lage aus Mikrodrahtgewebe und einem Abdeckfolienstück überdeckt ist. Mittels der Druckausgleichvorrichtungen ist ein Druckausgleich in der Wärmedämmanordnung möglich, wenn beispielsweise bei Inbetriebnahme der thermischen Turbomaschine hohe Temperaturänderungen auftreten. Das über der Öffnung angeordnete Mikrodrahtgewebe und das Abdeckfolienstück verhindern ein Austreten von Wärmedämmaterial aus der Ummantelung bei einer schnellen Druckänderung.

Die Erfindung betrifft auch eine Flugzeuggasturbine mit einer Wärmedämmanordnung zum wärmedämmenden Ausfüllen eines in einer Gehäusewand einer Flugzeuggasturbine vorhandenen Hohlraums. Die erhöhte Wärmeisolation zwischen einem Gasverdichtungsbereich der Flugzeuggasturbine und einer Gehäusewand bewirkt eine geringere radiale Ausdehnung des Gehäuses, wodurch eine erhöhte Dichtigkeit zwischen den rotierenden Turbinenschaufeln und statisch am Gehäuse angebrachten Dichtelementen erreicht wird. Eine derart ausgestattete Flugzeuggasturbine weist aufgrund der verbesserten Dichtleistung eine erhöhte Leistungsfähigkeit und eine geringere Ausfallgefahr auf.

Weitere vorteilhafte Ausführungsformen gehen aus den Unteransprüchen hervor.

Im folgenden soll die Erfindung anhand von zeichnerisch dargestellten Ausführungsbeispielen näher erläutert und beschrieben werden. In den Zeichnungen zeigen:
- Fig. 1: eine Querschnittsansicht einer in einer erfindungsgemäßen thermischen Turbomaschine verwendbaren Ausführungsform einer Wärmedämmanordnung;
- Fig. 2: eine in vergrößerter Darstellung gezeichnete Detailansicht eines Verbindungsfalzes zweier Teilflächen einer Ummantelung der Wärmedämmanordnung nach der Fig. 1;
- Fig. 3: eine vergrößerte Darstellung von in der Ummantelung ausgebildeten Dehnungsfalten gemäß einer weiteren Ausführungsform;
- Fig. 4: eine Ansicht einer für eine thermische Turbomaschine verwendbaren weiteren Ausführungsform der Wärmedämmanordnung mit einem doppelwandig ausgebildeten Ummantelungsteil;
- Fig. 5: eine entlang der Linie IV-IV ausgeführte Querschnittsansicht der in der Fig. 4 gezeigten Ausführungsform;
- Fig. 6: eine Draufsicht auf eine Druckausgleichsvorrichtung;
- Fig. 7: eine entlang der Linie I-I ausgeführte, vergrößerte Querschnittsansicht der in der Fig. 6 gezeigten Druckausgleichsvorrichtung;
- Fig. 8: eine axiale Querschnittsansicht durch einen Randbereich eines erfindungsgemäßen Flugzeuggasturbinentriebwerks, in dem in Hohlräumen in einer Gehäusewand die Wärmedämmanordnung verwendet wird;
- Fig. 9: eine grafische Darstellung des Temperaturverhaltens von Teilen des Flugzeuggasturbinengehäuses mit und ohne Verwendung der erfindungsgemäßen Wärmedämmanordnung, beim Anlaufen des Triebwerks; und
- Fig. 10: eine schematische Darstellung der Aushöhlung von Dichtelementen durch gegenüberliegende Dichtspitzen der Laufschaufeln zu verschiedenen Zeitpunkten des in der Fig. 9 gezeigten Temperaturverlaufs.

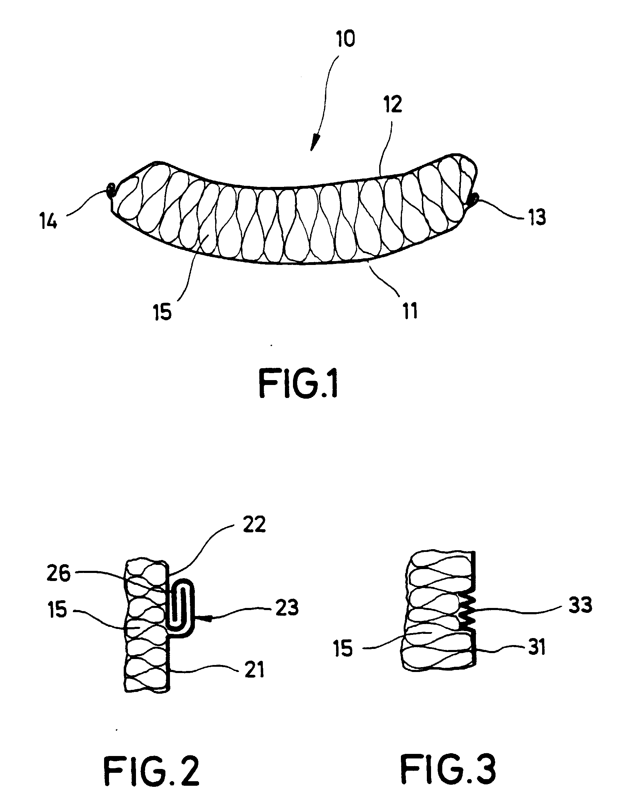

In der Fig. 1 wird ein Beispiel einer für eine erfindungsgemäße thermische Turbomaschine geeigneten Wärmedämmanordnung 10 im Querschnitt gezeigt. Eine aus zwei Teilflächen 11 und 12 bestehende Ummantelung umschließt ein Wärmedämmaterial 15. Die Ummantelung weist eine an einen jeweiligen Hohlraum, in den die Wärmedämmanordnung einzufügen ist, charakteristisch angepaßte Form auf. An den seitlichen Endbereichen der Wärmedämmanordnung sind durch Umfalzen der übereinandergelegten Randbereiche der beiden Randflächen 11 und 12 aufziehbare Verbindungen 13 und 14 geschaffen. Die Ummantelung besteht aus einer hochtemperaturfesten Metallfolie. Beispielsweise eignet sich für die Ummantelung eine etwa 20 µm dicke Folie aus einem Nikkel enthaltenden Stahl, wie Inconel 600. Es können jedoch auch andere Metalle und unterschiedliche Folienstärken verwendet werden. Beispielsweise kann auch eine Ummantelung aus einem temperaturfesten Keramikfasergewebe verwendet werden.

Das Wärmedämmaterial kann aus einer Verbundstoffmischung von nicht expandiertem Tonerdesilikat-Keramikfaser-Vermiculit und einem organischen Bindesystem bestehen. Es enthält in einer Ausführungsform Vermiculit mit einem Anteil von 45 bis 62,5 %, Aluminiumsilikat mit einem Anteil von 27,5 bis 45 % und ein Acrylharz mit einem Anteil von 6 bis 13 %.

Eine weitere Ausführungsform des Wärmedämmaterials weist die folgenden Stoffe auf: 54,0 % NiO₂, 23,0 % Al₂O₃, 0,5 % TiO₂, 3,5 % Fe₂O₃, 1,0 % CaO, 14,0 % MgO, 3,0 % K₂O. Ein Wärmedämmmaterial dieser Ausführungsform weist ein Raumgewicht von 0,63 g/cm³ auf, einen Glühverlust bei 900° C von 15 Gewichtsprozent, eine Festigkeit von mehr als 100 kPa, eine Druckfestigkeit bei 2,3 mm Dicke von bis zu 4.800 kPa, eine Wärmeleitfähigkeit bei 700° C von 0,10 W/mK und eine Wärmeleitfähigkeit bei 900° C von 0,13 W/mK.

Hohe Temperaturen bewirken eine Aufblähung bzw. Expansion des Wärmedämmstoffs bis zu 300 % seiner Ausgangsdicke. Der Expansionbeginn liegt bei einer Temperaturbeaufschlagung von ca. 350°C und die größte Expansion findet bei ca. 700°C statt.

In der Fig. 2 wird in einer vergrößerten Darstellung eine besondere Ausführungsform zur Verbindung der beiden die Ummantelung bildenden Teilflächen 11 und 12 gezeigt. Die übereinandergelegten Randbereiche der Teilflächen 11 und 12 sind an einem Falz 26 umgefalzt, um eine durch Zug an den Teilflächen 21 und 22 aufziehbare Verbindung 23 zu schaffen. Diese Ausführungsform für eine Verbindung der Teilflächen 21 und 22 erweist sich insbesondere bei Verwendung einer Metallfolie als vorteilhaft, da durch die elastische Gestaltfestigkeit der Metallfolie eine zuverlässige Verbindung gebildet wird, die sich dennoch bereits bei geringen Zugkräften entlang der Teilflächen 21 und 22 aufzieht.

Eine in der Fig. 3 gezeigte weitere Ausführungsform mit in der Ummantelung 31 angeordneten Dehnungsfalten 33 erweist sich ebenfalls bei Verwendung einer Ummantelung aus Metall als besonders vorteilhaft. Die Verwendung der Dehnungsfalten 33 in der Ummantelung 31 kann insbesondere bei dickeren Metallfolien, die eine höhere elastische Gestaltfestigkeit aufweisen, eine Volumenerhöhung der Ummantelung ermöglichen, wenn das eingeschlossene Wärmedämmaterial 15 sich aufbläht.

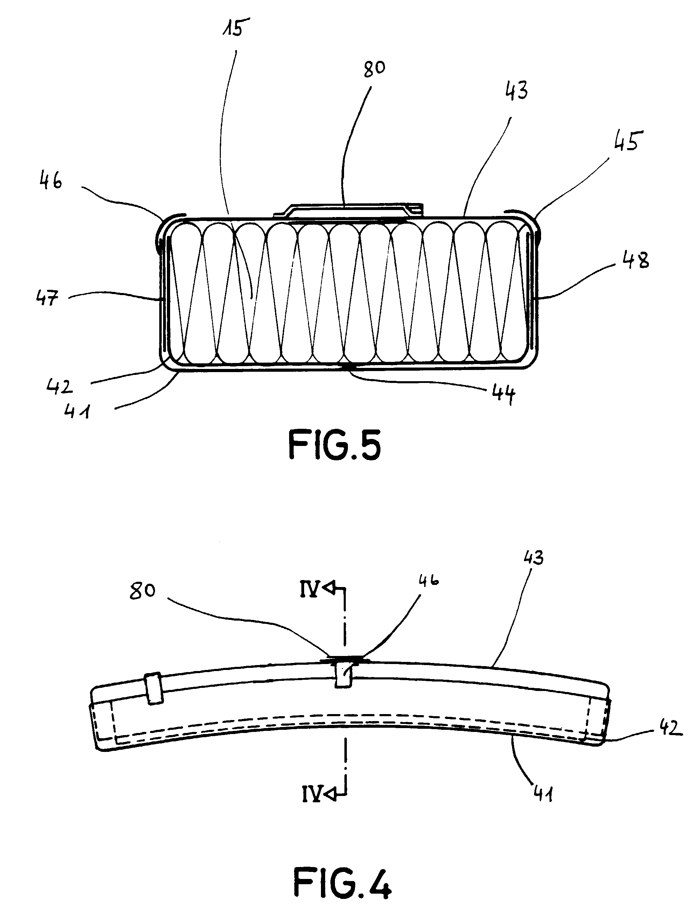

In der Fig. 4 ist eine weitere Ausführungsform der Wärmedämmanordnung gezeigt, bei der ein in der Darstellung untenliegendes Teil der Ummantelung doppelwandig mit einem äußeren Mantel 41 und einem inneren Mantel 42 (in der Zeichnung strichliert dargestellt) ausgebildet ist. Eine obere Mantelfläche ist in den zwischen dem inneren Mantel 42 und dem äußeren Mantel 41 gebildeten Spalt gesteckt.

In der Fig. 5, die eine entlang der Linie IV-IV ausgeführte Querschnittsansicht ist, ist eine Verbindung 44 zwischen dem äußeren Mantel 41 und dem inneren Mantel 42 gezeigt. Eine solche Verbindung kann beispielsweise eine Punktschweißstelle sein. An der seitlichen Randkante des äußeren Mantels 41 sind Haltespangen 45 und 46 angebracht, die über die obere Mantelfläche 43 gebogen sind, um ein Austreten der eingesteckten Bereiche 47 und 48 der oberen Mantelfläche 43 aus dem Spalt der doppelwandigen unteren Ummantelung zu verhindern.

Bei Verwendung des Keramikfasergewebes als Ummantelung kann eine Erhöhung des Innenvolumens der Ummantelung beispielsweise durch die Dehnfähigkeit der Gewebestruktur erzielt werden.

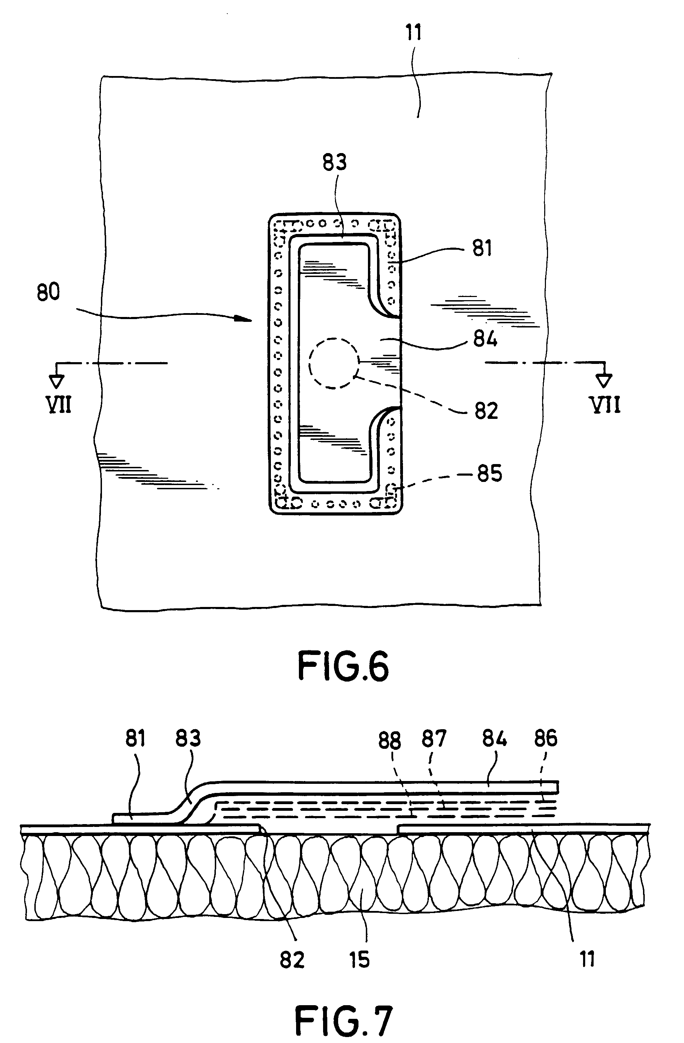

Eine Druckausgleichsvorrichtung 80 für die Wärmedämmanordnung 10 wird in der Fig. 6 gezeigt. Eine entlang der Schnittlinie I-I in der Fig. 6 ausgeführte, vergrößerte Querschnittsansicht wird in der Fig. 7 gezeigt, wobei in dem Querschnitt die Richtung senkrecht zur Oberfläche der Ummantelung 11 überproportional vergrößert dargestellt ist. Die Druckausgleichsvorrichtung 80 umfaßt eine Öffnung 82 in der Ummantelung 11, die im vorliegenden Beispiel kreisförmig ausgebildet ist. Über der Öffnung 82 sind auf der dem Wärmedämmaterial 15 gegenüberliegenden Seite der Ummantelung 11 drei die Ummantelung 11 überlappende Mikrodrahtgewebe 86, 87 und 88 angeordnet. Die Mikrodrahtgewebe weisen im wesentlichen eine rechteckige Grundform auf. Die Mikrodrahtgewebe sind zwischen der Umhüllung 11 und einem Abdeckfolienstück 81 angeordnet, das ebenfalls eine Rechteckform mit größerer Breite und Länge aufweist. Das Abdeckfolienstück 81 weist einen hochgezogenen inneren Bereich 84 auf, der im wesentlichen der Größe der Mikrodrahtgewebe 86, 87, 88 entspricht. Zwischen dem hochgezogenen Bereich 84 und einem mittels Punktverschweißungen 85 an der Ummantelung 11 befestigten äußeren Bereich des Abdeckfolienstücks 81 ist ein Flankenbereich 83 vorhanden. Der hochgezogene Bereich 84 ist in einem Teilbereich derart bis zu einer Längskante des rechteckförmigen Abdeckfolienstücks 81 erweitert, daß in diesem Teilbereich ein Kanal zwischen dem Abdeckfolienstück 81 und der Ummantelung 11 gebildet wird. Durch den Kanal kann ein Gasaustausch über die Öffnung 82 in der Ummantelung 11 durch die Mikrodrahtgitter hindurch zwischen der Umgebung und dem Wärmedämmaterial 15 stattfinden. Die Druckausgleichsvorrichtung 80 schafft bei einer Temperaturerhöhung einen wirksamen Druckausgleich, um ein Aufplatzen der Ummantelung durch einen Überdruck von in dem Wärmedämmaterial vorhandenen Gas zu verhindern. Weiter wird beim Entweichen der organischen Bindemittel eine Austrittsöffnung für das dabei entstehende Kohlendioxid und Wasserdampf geschaffen. Bei einer Abkühlung der Wärmedämmanordnung wird durch Nachströmen von Gas aus der Umgebung in das Wärmedämmaterial ein Schrumpfen der Wärmedämmanordnung verhindert.

Die Mikrodrahtgewebe 86, 87 und 88 verhindern den Eintritt von Fremdpartikeln, sowie den Austritt von Wärmedämmaterial, der bei Verwendung der Wärmedämmvorrichtung in einer Gasturbine vermieden werden muß. Das Abdeckfolienstück 81 besteht in diesem Ausführungsbeispiel aus demselben Material wie die Ummantelung 11, d.h. beispielsweise aus Inconel 600.

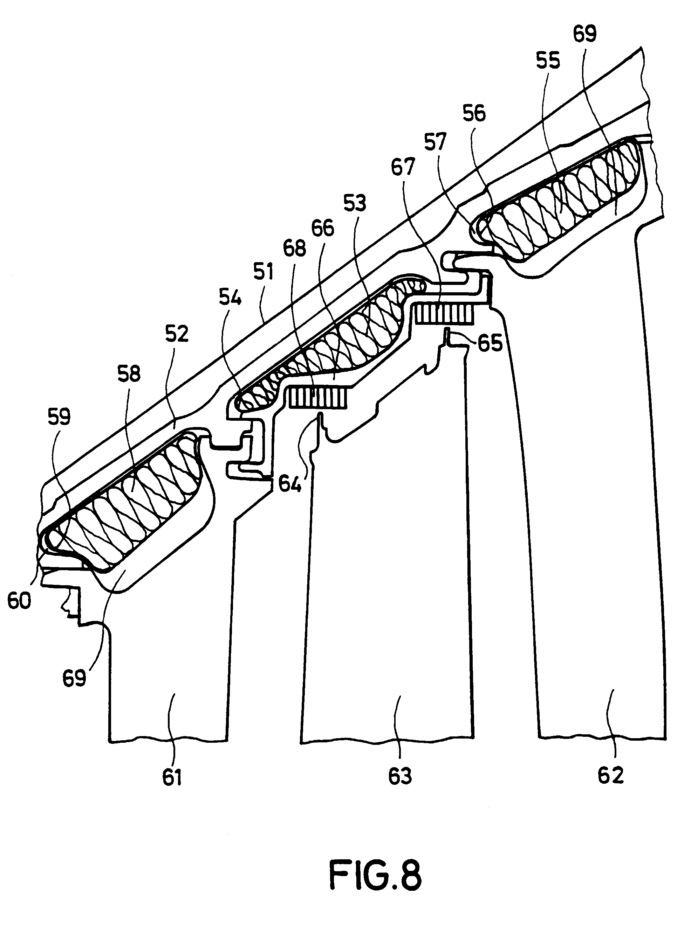

Nachfolgend wird eine erfindungsgemäße thermische Turbomaschine, eine Flugzeuggasturbine, mit einer zuvor beschriebenen Wärmedämmanordnung in bezug auf Fig. 8 gezeigt, in der ein teilweise axialer Querschnitt durch einen Randbereich der Flugzeuggasturbine dargestellt ist. Ein aus zwei Schichten 51 und 52 bestehendes äußeres Gehäuse der Flugzeuggasturbine weist Hohlräume 69 auf, in die die erfindungsgemäßen Wärmedämmanordnungen 53, 55, 58 mit im wesentlichen an die Hohlräume angepaßter Form eingefügt sind. Die Hohlräume 69 werden durch Vertiefungen in der zweiten Gehäusewandschicht 52 gebildet, die entweder von einem Fußteil einer feststehenden Turbinenschaufel 61 oder 62 überdeckt werden, oder die andererseits von einem Hitzeschild 66 überdeckt werden.

Anstelle des Hitzeschilds 66 kann auch die Wärmedämmanordnung auf der dem Heißgas zugewandten Seite einen geeignet ausgebildeten, die Aufgaben des Hitzeschilds übernehmenden Isolierungsmantel aufweisen.

An dem Hitzeschild 66 sind Dichtelemente 66 und 67 angeordnet, die an an einer drehbaren Turbinenwelle (in der Zeichnung nicht gezeigt) befestigten Laufschaufel 63 angebrachten Dichtspitzen 64, 65 gegenüber liegen. Die Dichtelemente können beispielsweise eine wabenförmige Struktur aufweisen. Die Wärmedämmvorrichtungen 53, 55 und 58 füllen nach der Montage die Hohlräume 69 teilweise auf, wobei insbesondere Spalte und Freiräume 57 und 60 bleiben, die ein Hinterkriechen der Wärmedämmelemente 55 und 58 mit Heißgas ermöglichen. Um eine Konvektionswärmeleitung mittels Heißgashinterkriechen in diesen Spalten, die die Wärmedämmeigenschaft erheblich reduziert, zu vermeiden, wird durch eine Erwärmung eine Ausdehnung der Wärmedämmelemente 53, 55 und 58 im wesentlichen in seitlicher (axialer) Richtung bis zum Anschlag an die Innenwände der Hohlräume 69 bewirkt, wodurch die Freiräume 60 und 57 ausgefüllt werden. Damit ist ein Heißgashinterkriechen der Wärmedämmanordnungen 55 und 59 unterbunden.

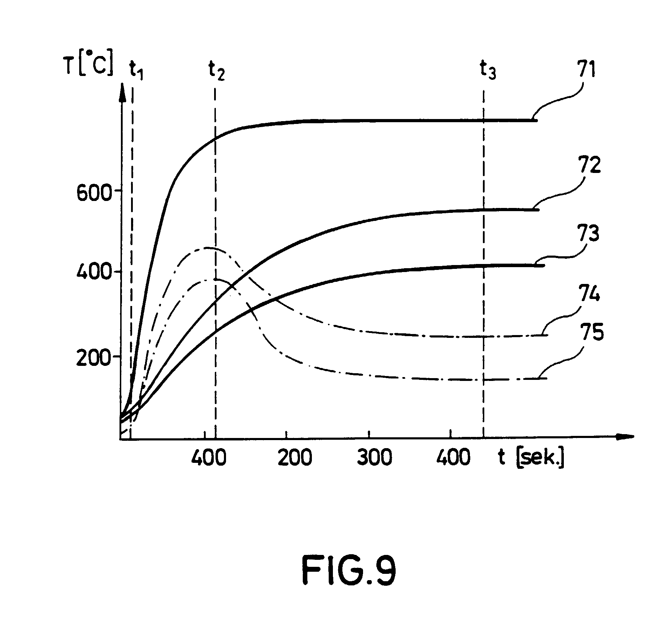

Zur Erläuterung der wesentlichen Bedeutung der Wärmedämmung des Gehäuses einer Flugzeuggasturbine gegen einen Hochtemperaturbereich in einem Gasverdichter der Turbine ist in der Fig. 9 eine grafische Darstellung der Temperaturverläufe beim Anfahren der Flugzeuggasturbine gezeigt. Anhand der gezeigten Kurven soll symptomatisch das Temperaturverhalten erläutert werden. Im Diagramm der Fig. 9 bezeichnet 71 einen Temperaturverlauf der Laufschaufeln 63, 72 einen Temperaturverlauf der Gehäuseschicht 51 bei herkömmlicher Wärmedämmung und 73 einen Temperaturverlauf der Gehäuseschicht 51 bei der erfindungsgemäßen thermischen Turbomaschine. In dem Diagramm sind Zeitmarken tl zu Beginn des Anlaufprozesses, t2 während des maximalen Anstiegs der Gehäusetemperatur und t3 in der Nähe des Gleichgewichtszustands gezeigt. Im Bereich der Zeitmarke t3 ist erkennbar, daß die Temperatur 71 der Laufschaufel 63 wesentlich höher ist als die Temperaturen 72 oder 73 der herkömmlich oder erfindungsgemäß wärmegedämmten Gehäuseschicht 51. Der Temperaturunterschied kann mehrere hundert Grad betragen. Weiter liegt die Gehäusetemperatur 73 der erfindungsgemäß wärmegedämmten Anordnung bis zu 200° unter der Gehäusetemperatur 72 bei herkömmlicher Wärmedämmung. Ein weiteres wesentliches Merkmal des Aufheizverhaltens der Flugzeuggasturbine wird im Bereich der Zeitmarke t2 ersichtlich. Die Temperatur 71 der Laufschaufel 63 nähert sich ihrem Gleichgewichtswert nach wesentlich kürzer Zeit, als dies für die Temperaturen 72 oder 73 der herkömmlich oder erfindungsgemäß wärmegedämmten Gehäuseschicht 51 der Fall ist. Dadurch ergibt sich im Bereich der Zeitmarke t2 vorübergehend eine maximale Temperaturdifferenz zwischen der Laufschaufel 63 und dem Gehäuse, wie es in den strichpunktierten Verläufen 74 und 75 für die Temperaturdifferenz bei erfindungsgemäßer und bei herkömmlicher Wärmedämmung gezeigt ist.

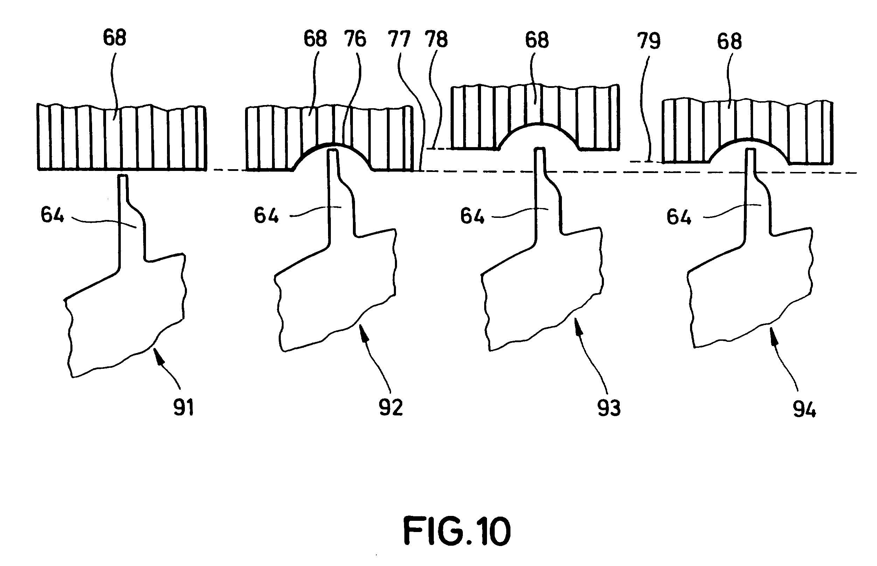

In der Fig. 10 ist anhand der Folge von Darstellungen 91, 92, 93 und 94 die gegenseitige Lage der Dichtspitze 64 an der Laufschaufel 63 gegenüber dem wabenförmigen Dichtelement 68 bei den den Zeitmarken tl, t2 und t3 entsprechenden Zuständen der radialen Ausdehnung der Flugzeuggasturbine dargestellt. In der Darstellung 91 befindet sich sowohl das Gehäuse als auch die Laufschaufel 63 in der Ausgangstemperatur, so daß sich die Dichtspitze 64 in einem geringen, montagebedingten Abstand gegenüber dem Dichtelement 68 befindet. Beim Anlaufprozeß erwärmt sich zunächst die Laufschaufel 63 und dehnt sich dabei in radialer Richtung aus, wodurch eine Kerbe 76 in das Dichtelement 68 durch die sich drehende Dichtspitze 64 gefräst wird. Da sowohl eine radiale wie auch eine axiale thermische Expansion vorhanden ist, weist die ausgefräste Kerbe 76 eine Rinnenform auf. In der Darstellung 92 ist zunächst die radiale Ausdehnung des Gehäuses vernachlässigt, um den Effekt der Einkerbung des Dichtelements 68 deutlicher darzustellen.

In den Darstellungen 93 und 94 ist die gegenseitige Lage der Dichtspitze 64 gegenüber Dichtelement 68 für eine herkömmliche Wärmedämmanordnung, die zu einer höheren Temperatur 72 führt, und für eine erfindungsgemäße Wärmedämmanordnung gezeigt, die zu einer niedrigeren Temperatur 73 führt. Wie in der Darstellung 93 zu sehen ist, führt die aufgrund der geringeren Wärmedämmung bei herkömmlicher Wärmedämmvorrichtung erhaltene höhere Gehäusetemperatur 72 zu einer größeren radialen thermischen Expansion des Gehäuses, die eine Verschiebung der Dichtoberfläche des Dichtelements 68 von einem ursprünglichen Niveau 77 zu einem Niveau 78 bewirkt. Wie in der Darstellung 94 gezeigt ist, wird bei der verbesserten thermischen Turbomaschine eine verringerte radiale thermische Expansion des Gehäuses erzielt, so daß sich die Dichtoberfläche des am Gehäuse befestigten Dichtelements 68 zu einem Niveau 79 verschiebt, das einen geringeren Abstand als das Niveau 78 vom Ausgangsniveau 77 aufweist. Wie durch den Vergleich der Darstellungen 93 und 94 offensichtlich wird, weist die Dichtvorrichtung in der erfindungsgemäßen Flugzeuggasturbine bei Verwendung der o.g. Wärmedämmanordnung im Bereich der Zeitmarke t3 einen gegenüber der Verwendung einer herkömmlichen Dämmvorrichtung wesentlich verringerten Spalt auf. Durch die Verringerung dieses Spalts wird eine Verbesserung der Betriebseigenschaften der Flugzeuggasturbine erzielt. Die o.g. Wärmedämmanordnung findet daher eine bevorzugte Verwendung im Bau von Flugzeuggasturbinen, deren Leistungspotential durch das verbesserte Wärmedämmverhalten gesteigert werden kann.

Eine Verwendung der o.g. Wärmedämmanordnung erweist sich auch bei stationären Gasturbinen als vorteilhaft. Allgemein kann die Wärmedämmanordnung bei thermischen Turbomaschinen verwendet werden, bei denen bestimmte Geräteteile auf unterschiedlichen Temperaturniveaus gehalten werden müssen. Durch die verbesserte Wärmedämmung, die mit der o.g. Wärmedämmanordnung geschaffen wird, können die thermischen Turbomaschinen zum einen mit einem verbesserten Wirkungsgrad betrieben werden, zum anderen können die in ihrem Temperaturniveau abgesenkten Geräteteile durch kostengünstige Werkstoffe mit geringeren Temperaturanforderungen ersetzt werden.

## Patentansprüche

1. Thermische Turbomaschine mit wenigstens einem eine Wärmedämmanordnung (10) enthaltenden, aus Gehäuseteilen (51, 52) gebildeten Hohlraum, wobei die Wärmedämmanordnung ein in einer hitzebeständigen Ummantelung (11, 12) eingeschlossenes Wärmedämmaterial (15) aufweist, **dadurch gekennzeichnet,** daß die Ummantelung (11, 12) derart ausgebildet ist, daß sie eine Veränderung des Innenvolumens erlaubt, daß das Wärmedämmaterial (15) aus einem bei Erwärmung sein Volumen vergrößernden Wärmedämmaterial besteht und die Ummantelung (11, 12) mittels des bei Erwärmung sein Volumen vergrößernden Wärmedämmaterials ausdehnbar ist zur thermoautomatischen Volumenexpansion bis zur Anlage an die einen Widerstand entgegensetzenden, den Hohlraum begrenzenden Gehäuseteile (51, 53).

2. Thermische Turbomaschine nach Anspruch 1, **dadurch gekennzeichnet,** daß die Ummantelung (11, 12) aus einer Metallfolie besteht.

3. Thermische Turbomaschine nach Anspruch 1, **dadurch gekennzeichnet,** daß die Ummantelung (11, 12) aus einem temperaturfesten Keramikfasergewebe besteht.

4. Thermische Turbomaschine nach einem der Ansprüche 1 bis 3, **dadurch gekennzeichnet,** daß die Ummantelung aus wenigstens zwei Teilflächen (11, 12) besteht, deren übereinander angeordnete Randbereiche (13, 14) umgefalzt sind, um eine bei der Volumenänderung des Wärmedämmaterials (15) aufweitbare Verbindung zu schaffen.

5. Thermische Turbomaschine nach einem der Ansprüche 1 bis 3, **dadurch gekennzeichnet,** daß die Ummantelung (31) Dehnungsfalten (33) ausweist.

6. Thermische Turbomaschine nach einem der Ansprüche 1 bis 3, **dadurch gekennzeichnet,** daß die Ummantelung aus wenigstens zwei Teilflächen (41, 42) besteht, deren Randbereiche (43) überlappend angeordnet sind, um eine Vergrößerung des Innenvolumens bei Volumenvergrößerung des Wärmedämmaterials (15) zu schaffen.

7. Thermische Turbomaschine nach einem der Ansprüche 1 bis 6, **dadurch gekennzeichnet,** daß das Wärmedämmaterial (15) bei Erwärmung von einer Ausgangstemperatur zu einer Verformungstemperatur sich irreversibel ausdehnt.

8. Thermische Turbomaschine nach einem der Ansprüche 1 bis 7, **dadurch gekennzeichnet,** daß das Wärmedämmaterial (15) Vermiculit enthält.

9. Thermische Turbomaschine nach einem der Ansprüche 1 bis 8, **dadurch gekennzeichnet,** daß an der Ummantelung (11) Druckausgleichsvorrichtungen (80) vorgesehen sind.

10. Thermische Turbomaschine nach Anspruch 9, **dadurch gekennzeichnet,** daß die Druckausgleichsvorrichtung (80) eine Öffnung (82) in der Ummantelung (11) umfaßt, die mit wenigstens einer Lage aus Mikrodrahtgewebe (86) und einem Abdeckfolienstück (81) überdeckt wird.

11. Thermische Turbomaschine nach Anspruch 10, **dadurch gekennzeichnet,** daß das Mikrodrahtgewebe (86) auf der Außenseite der Ummantelung (11) überlappend über der Öffnung (82) zwischen der Ummantelung und der Abdeckfolie (81) angeordnet ist.

12. Flugzeuggasturbine mit den Merkmalen nach einem der Ansprüche 1 bis 11.

13. Flugzeuggasturbine nach Anspruch 12, **dadurch gekennzeichnet,** daß der Hohlraum durch eine auf der Innenseite des Gehäuses ausgebildete Vertiefung, die von einem Hitzeschild abgedeckt wird, geschaffen wird.

14. Flugzeuggasturbine nach Anspruch 13, **dadurch gekennzeichnet,** daß das Hitzeschild durch eine besondere Ausbildung der gasseitig gelegenen Ummantelung gebildet wird.

15. Flugzeuggasturbine nach einem der Ansprüche 12, 13 oder 14, **dadurch gekennzeichnet,** daß ein weiterer, die Wärmedämmanordnung aufnehmender Hohlraum von einer auf der Innenseite des Gehäuses angeordneten Vertiefung, die durch ein Fußteil einer radial nach innen abstehenden stationären Turbinenschaufel überdeckt wird, gebildet wird.

## Claims

1. A thermal turbo-engine having at least one hollow space which contains a heat insulation assembly (10) and is composed of housing parts (51, 52), said heat insulation assembly including a heat-insulating material (15) enclosed within a heat-resistant cover (11, 12), **characterized in** that said cover (11, 12) is formed such that it permits a change in inner volume, that said heat-insulating material (15) consists of a heat-insulating material which increases its volume when heated, and said cover (11, 12) is expandable by means of the heat-insulating material which increases its volume when heated, for thermoautomatic volume expansion until contact with said housing parts (51, 53) which offer resistance and define the hollow space.

2. A thermal turbo-engine according to claim 1, **characterized in** that said cover (11, 12) is made of a metal foil.

3. A thermal turbo-engine according to claim 1, **characterized in** that said cover (11, 12) is made of a temperature-resistant ceramic fiber tissue.

4. A thermal turbo-engine according to any one of claims 1 to 3, **characterized in** that said cover consists of at least two partial surfaces (11, 12) whose superimposed edge portions (13, 14) are folded to create a connection which is expandable upon change in volume of said heat-insulating material (15).

5. A thermal turbo-engine according to any one of claims 1 to 3, **characterized in** that said cover (31) comprises expansion folds (33).

6. A thermal turbo-engine according to any one of claims 1 to 3, **characterized in** that said cover consists of at least two partial surfaces (41, 42) whose edge portions (43) are arranged in overlapping fashion to create an increase in the inner volume upon increase in volume of said heat-insulating material (15).

7. A thermal turbo-engine according to any one of claims 1 to 6, **characterized in** that said heat-insulating material (15) is irreversibly expanded when heated from an initial temperature to a deformation temperature.

8. A thermal turbo-engine according to any one of claims 1 to 7, **charaterized in** that said heat-insulating material (15) contains vermiculite.

9. A thermal turbo-engine according to any one of claims 1 to 8, **characterized in** that pressure compensating devices (80) are provided on said cover (11).

10. A thermal turbo-engine according to claim 9, **characterized in** that said pressure compensating device (80) has an opening (82) in said cover (11), said opening being covered with at least one layer of microwire fabric (86) and a covering foil member (81).

11. A thermal turbo-engine according to claim 10, **characterized in** that said microwire fabric (86) is arranged on the external side of said cover (11) in overlapping fashion above said opening (82) between said cover and said covering foil (81).

12. An aircraft gas turbine comprising the features according to any one of claims 1 to 11.

13. An aircraft gas turbine according to claim 12, **characterized in** that said hollow space is created by a recess formed on the inside of said housing and covered by a thermal shield.

14. An aircraft gas turbine according to claim 13, **characterized in** that said thermal shield is formed by a special configuration of said cover positioned at the gas side.

15. An aircraft gas turbine according to any one of claims 12, 13 or 14, **characterized in** that another hollow space receiving said thermal insulation assembly is formed by a recess which is arranged on the inside of said housing and is covered by a base member of a stationary and radially inwardly projecting turbine blade.

## Revendications

1. Turbomachine thermique comportant au moins un espace creux contenant un dispositif d'isolaticn thermique (10), constitué de deux parties de carter (51, 52), le dispositif d'isolation thermique présentant un matériau d'isolation thermique (15) inclus dans une enveloppe (11, 12) résistante à la température, caractérisée en ce que l'enveloppe (11, 12) est réalisée de manière à permettre une modification du volume intérieur, en ce que le matériau d'isolation thermique (15) est constitué d'un matériau d'isolation thermique qui subit une augmentation de son volume lors du chauffage et l'enveloppe (11, 12) étant dilatable par le biais de l'augmentation de volume se produisant lors du chauffage sur le matériau d'isolation thermique, en vue de produire une expansion thermo-automatique du volume, jusqu'à la mise en appui sur les parties de carter (51, 53) délimitant l'espace creux et opposant une résistance.

2. Turbomachine thermique selon la revendication 1, caractérisée en ce que l'enveloppe (11, 12) est constituée d'une feuille métallique.

3. Turbomachine thermique selon la revendication 1, caractérisée en ce que l'enveloppe (11, 12) est constituée d'un tissu en fibres céramiques résistant à la température.

4. Turbomachine thermique selon l'une quelconque des revendications 1 à 3, caractérisée en ce que l'enveloppe est constituée d'au moins deux surfaces partielles (11, 12), dont les zones de bordure (13, 14) disposées l'une sur l'autre sont repliées pour créer une liaison pouvant être agrandie lors de la modification de volume du matériau d'isolation thermique (15).

5. Turbomachine thermique selon l'une quelconque des revendications 1 à 3, caractérisée en ce que l'enveloppe (31) présente des plis d'étirement (33).

6. Turbomachine thermique selon l'une quelconque des revendications 1 à 3, caractérisée en ce que l'enveloppe est constituée d'au moins deux surfaces partielles (41, 42), dont les zones de bordure (43) sont disposées en chevauchement pour créer un agrandissement du volume intérieur au moment de l'agrandissement de volume du matériau d'isolation thermique (15).

7. Turbomachine thermique selon l'une quelconque des revendications 1 à 6, caractérisée en ce que le matériau d'isolation thermique (15) s'étend de façon irréversible lors du chauffage d'une température initiale à une température de préformage.

8. Turbomachine thermique selon l'une quelconque des revendications 1 à 7, caractérisée en ce que le matériau d'isolation thermique (15) contient de la vermiculite.

9. Turbomachine thermique selon l'une quelconque des revendications 1 à 8, caractérisée en ce que des dispositifs d'équilibrage de pression (80) sont prévus sur l'enveloppe (11).

10. Turbomachine thermique selon la revendication 9, caractérisée en ce que le dispositif d'équilibrage de pression (80) comprend une ouverture (82), ménagée dans l'enveloppe (11) et recouverte d'au moins une couche d'un tissu de microfils (86) et d'une pièce de feuille de recouvrement (81).

11. Turbomachine thermique selon la revendication 10, caractérisée en ce que le tissu de microfils (86) est disposé sur la face extérieure de l'enveloppe (11) de manière chevauchante sur l'ouverture (82), entre l'enveloppe et la feuille de recouvrement (81).

12. Turbine à gaz pcur aéronef présentant l'une des caractéristiques des revendications 1 à 11.

13. Turbine à gaz pour aéronef selon la revendication 12, caractérisée en ce que l'espace creux est crée par un creusement réalisé en face intérieure du carter et recouvert d'un bouclier thermique.

14. Turbine à gaz pour aéronef selon la revendication 13, caractérisée en ce que le bouclier thermique est constitué par une réalisation particulière de l'enveloppe placée côté gaz.

15. Turbine à gaz pour aéronef selon l'une quelconque des revendications 12, 13 ou 14 caractérisée en ce qu'un autre espace creux, recevant le dispositif d'isolation thermique, est constitué par un creusement disposé en face intérieure du carter et est recouvert par une partie pied d'une aube de turbine stationnaire faisant saillie radialement vers l'intérieur.
